# EUROPÄISCHE PATENTSCHRIFT

(11) **EP 4 384 373 B1**
(45) Veröffentlichungstag und Bekanntmachung des Hinweises auf die Patenterteilung: **10.09.2025**
(21) Anmeldenummer: 22748017.5
(22) Anmeldetag: 08.07.2022
(51) Int. Cl.: B29C 64/106, B33Y 10/00, B33Y 80/00

(54) **HYBRIDE HERSTELLUNG DREIDIMENSIONALER BAUTEILE**
HYBRID MANUFACTURE OF THREE-DIMENSIONAL COMPONENTS
FABRICATION HYBRIDE DE COMPOSANTS TRIDIMENSIONNELS

(30) Priorität: 10.08.2021 DE 102021208698
(43) Veröffentlichungstag der Anmeldung: 19.06.2024
(73) Patentinhaber: Robert Bosch GmbH, 70442 Stuttgart (DE)
(72) Erfinder: JAHNLE, Hendrik, 71397 Leutenbach (DE); JOOST, Mario, 71229 Leonberg (DE); EIDENPENCZ, Tim, 71332 Waiblingen (DE)
(86) Internationale Anmeldenummer: PCT/EP2022/069048
(87) Internationale Veröffentlichungsnummer: WO 2023/016720

(56) Entgegenhaltungen:
- DE-A1- 102016 222 558
- US-A1- 2005 015 171
- US-A1- 2013 170 171

## Beschreibung

Die vorliegende Erfindung betrifft die Fertigung von Bauteilen als Verbund aus einer dreidimensionalen Form und einem Füllmaterial.

### Stand der Technik

Dreidimensionale Objekte mit beliebiger Formgebung lassen sich mittels 3D-Druck herstellen. Die meisten 3D-Drucker bauen das herzustellende Objekt schichtweise von unten nach oben auf, indem sie dem Objekt an jeder Position innerhalb der Schicht, die zum Objekt gehört, Material hinzufügen.

Beim Aufbau einer neuen Schicht wird häufig geschmolzenes Material auf bereits verfestigtes Material aufgetragen. Daher ist die Festigkeit, mit der zwei Schichten aufeinander haften, häufig geringer als die Festigkeit einer einzelnen Schicht gegen Zugbeanspruchung oder Scherung in der Schichtebene. Weiterhin kann der 3D-Druck einer massiven Form sehr lange dauern. Daher offenbart die DE 10 2016 222 558 A1 ein 3D-Druckverfahren, bei dem eine gedruckte Struktur mit einem Monomer ausgefüllt und dieses Monomer anschließend polymerisiert wird.

### Offenbarung der Erfindung

Im Rahmen der Erfindung wurde ein Verfahren zur Herstellung eines dreidimensionalen Objekts entwickelt.

Das Verfahren beginnt damit, dass eine dreidimensionale Form, welche einen Innenraum definiert, bereitgestellt wird. Insbesondere kann beispielsweise eine mittels 3D-Druck gefertigte Struktur als dreidimensionale Form bereitgestellt werden. Dies ist etwa für die Fertigung von Kleinserien mit Losgrößen im ein- oder zweistelligen Bereich besonders kosteneffizient, da keine hohen Rüst- und Werkzeugkosten anfallen.

Ein Füllmaterial, welches mindestens ein flüssiges oder pastöses Monomer umfasst, wird in den Innenraum eingebracht. Das Monomer wird zu einem Polymer polymerisiert, wobei die Temperatur des Füllmaterials, und/oder die Temperatur einer äußeren Oberfläche der dreidimensionalen Form, überwacht wird. Auf der Basis des Ergebnisses dieser Überwachung wird die Qualität des Objekts bewertet, und/oder es wird mindestens eine Maßnahme ergriffen, um die Temperatur in eine gewünschte Richtung zu lenken.

Es wurde erkannt, dass die Polymerisation des Monomers zu dem Polymer nur in einem vergleichsweise engen Temperaturfenster optimal abläuft, während zugleich gerade in großvolumigen Objekten die Temperatur des Füllmaterials während der Polymerisation stark variiert. So läuft beispielsweise die Polymerisation von Caprolactam zu Polyamid-6 im Temperaturfenster zwischen 140 und 220 °C optimal.

Zugleich darf die Temperatur des Füllmaterials nicht über die Temperatur steigen, bei der sich die dreidimensionale Form erweicht oder gar zerstört. In diesem Fall wäre nicht mehr gewährleistet, dass das letztendlich hergestellte Objekt genau die Form hat, die zuvor etwa beim 3D-Druck der Form vorgegeben wurde. Bei Polyamid als 3D-druckbares Material für die Form liegt die Grenze bei etwa 200 °C. Für die Dynamik der Temperatur ist weiterhin wichtig, dass die Polymerisation eine exotherme Reaktion ist. Es entstehen Polymerisations- und Kristallisationswärme mit einer Leistung, die von der Reaktionsgeschwindigkeit abhängt.

Die räumliche Veränderung der Temperatur lässt sich anschaulich am Beispiel einer massiven Tasse mit einem Henkel verstehen. Im Inneren der Tasse kann sich die Wärme stauen und das Füllmaterial möglicherweise überhitzen. Im Henkel muss die Wärme aus dem Inneren hingegen einen deutlich geringeren Weg bis zur äußeren Oberfläche zurücklegen.

Das Bewerten der Qualität des Objekts kann somit insbesondere beispielsweise beinhalten, zu ermitteln,
- inwieweit die Temperatur des Füllmaterials überall im für das Polymerisieren vorgesehenen Bereich gelegen hat;
- inwieweit die Temperatur der dreidimensionalen Form lokal einen vorgegebenen Maximalwert überschritten (bzw. Minimalwert unterschritten) hat;
- mit welchem Temperatur-Zeit-Profil das Objekt abgekühlt ist;
- inwieweit die Temperatur des Füllmaterials, und/oder der dreidimensionalen Form, von einer auf der Basis eines Modells ermittelten Prognose abweicht.

Das Temperatur-Zeit-Profil entscheidet über die Kristallinität sowie mögliche mechanische Spannungen im erstarrten Füllmaterial.

Eine Abweichung der Temperatur von einer ermittelten Prognose muss nicht direkt physikalisch auf die Qualität des Objekts wirken, kann jedoch anzeigen, dass der Herstellungsprozess in irgendeiner Hinsicht nicht wie geplant verlaufen ist. Es besteht dann zumindest ein Anfangsverdacht, dass auch die Qualität des Bauteils nicht der ursprünglichen Planung entspricht. Beispielsweise kann im Prozess eine Leckage aufgetreten sein, oder das Objekt kann verschmutzt worden sein. Es können auch beispielsweise Heizungen in der Fertigungsanlage ausgefallen sein.

Alternativ oder in Kombination zur Bewertung der Qualität des Objekts kann die Temperatur aktiv in eine gewünschte Richtung gelenkt werden. Welche Maßnahmen hier sinnvoll sind, kann sich insbesondere beispielsweise danach richten, ob die Temperatur nur lokal in bestimmten Bereichen oder aber global zu korrigieren ist.

Beispielsweise kann die Temperatur eines Ofens, in dem das Monomer polymerisiert wird, und/oder eine Verweilzeit des Objekts in dem Ofen, verändert werden. Auf diese Weise kann die Temperatur insbesondere global korrigiert werden. Weiterhin wirkt die Veränderung am Objekt von außen nach innen, so dass in gewissem Umfang die Temperatur bevorzugt im Außenbereich des Objekts korrigiert werden kann.

Beispielsweise kann die Temperatur, mit der das Monomer in den Innenraum der dreidimensionalen Form eingebracht wird, verändert werden. Auch auf diese Weise kann die Temperatur global korrigiert werden. Die Temperaturveränderung pflanzt sich ausgehend von dem Ort fort, an dem das Monomer in den Innenraum eingeführt wird.

Das Objekt kann auch beispielsweise lokal erwärmt oder gekühlt werden. Zum lokalen Erwärmen kann beispielsweise ein Infrarotstrahl oder ein Laserstrahl verwendet werden. Zum lokalen Kühlen kann beispielsweise eine Luftdüse verwendet werden.

In einer besonders vorteilhaften Ausgestaltung beinhaltet das Überwachen der Temperatur, die Temperatur an einer Mehrzahl von Orten zu messen und unter Heranziehung dieser Temperaturen die Temperatur an mindestens einem weiteren Ort im Füllmaterial, und/oder in der dreidimensionalen Form, zu ermitteln. Die räumliche Verteilung der Temperatur kann insbesondere beispielsweise herangezogen werden, um eine Aussage darüber zu treffen, inwieweit die Polymerisation im ganzen Objekt vollständig durchgeführt wurde. Dies wiederum ist maßgeblich für die mechanische Festigkeit des Objekts, die beispielsweise im Rahmen des Qualitätsmanagements nachzuweisen ist.

Beispielsweise können die Orte, an denen die Temperatur gemessen werden soll, mit einem Infrarot-Thermometer abgetastet werden. Es kann aber auch beispielsweise ein Wärmebild des Objekts angefertigt werden, und die zu messenden Temperaturen können aus diesem Wärmebild extrahiert werden.

Die Temperatur an dem mindestens einen weiteren Ort im Füllmaterial kann insbesondere beispielsweise mit einem parametrierten Modell ermittelt werden, dessen Parameter anhand von Messungen der Temperatur an Orten innerhalb des Füllmaterials trainiert sind. Das Modell ist dann gleichsam ein "digitaler Zwilling" des Objekts, an dem sich Temperaturen an beliebigen Orten innerhalb des Objekts ablesen lassen.

Für das Training des Modells können beispielsweise Test-Objekte hergestellt werden, in die an bestimmten Positionen im Innenraum der dreidimensionalen Form Temperatursensoren eingelassen sind. Diese Temperatursensoren werden beim Einbringen des Füllmaterials eingegossen und können nach dem Erstarren des Füllmaterials nicht mehr entfernt werden. Daher kann diese Art der Temperaturüberwachung in der Regel nicht an den für die bestimmungsgemäße Verwendung bzw. den Verkauf vorgesehenen Objekten durchgeführt werden. Wenn aber das Modell den Zusammenhang zwischen den an zugänglichen Orten gemessenen Temperaturen einerseits und den an unzugänglichen Orten im Inneren des Füllmaterials herrschenden Temperaturen andererseits gelernt hat, genügt eine Messung der Temperaturen an den zugänglichen Orten, um das Temperaturprofil im Inneren des Objekts zumindest näherungsweise zu ermitteln. Das Modell kann insbesondere beispielsweise ein Machine Learning-Modell, wie etwa ein neuronales Netzwerk, beinhalten. Beim Aufstellen des Modells kann insbesondere beispielsweise auf vorhandenes Know-How der klassischen Füllsimulation aus dem Spritzguss zurückgegriffen werden.

Für das Einführen von Temperatursensoren an Orte im Innenraum der dreidimensionalen Form zwecks Training des Modells können insbesondere beispielsweise bei der Bereitstellung der dreidimensionalen Form Zugänge freigehalten werden. Die dreidimensionale Form muss dann nicht mehr von Hand verändert werden.

In einer besonders vorteilhaften Ausgestaltung werden Orte, an denen eine Messung der Temperatur beabsichtig ist, beim Bereitstellen der dreidimensionalen Form markiert und/oder vorbereitet. Beispielsweise kann an diesen Orten jeweils ein Loch oder eine Senke in die dreidimensionale Form eingebracht werden, um die Wandstärke der dreidimensionalen Form lokal zu vermindern. Die an diesen Orten gemessene Temperatur folgt dann gut der Temperatur des Füllmaterials.

In einer weiteren vorteilhaften Ausgestaltung wird mindestens ein Ort auf der äußeren Oberfläche der dreidimensionalen Form, an dem auf Grund der Geometrie der Form ein lokales Maximum oder Minimum der Temperatur zu erwarten ist, als Ort für die Temperaturmessung gewählt. Diese Temperaturen sind für sich genommen bereits aussagekräftig, da es im Kontext der Polymerisation hauptsächlich darum geht, die Reaktionstemperatur in einem vorgegebenen Korridor zu halten. Markante Orte im Hinblick auf ein lokales Minimum oder Maximum der Temperatur sind insbesondere beispielsweise Innenkanten, Löcher oder Bereiche mit der größten Wandstärke der dreidimensionalen Form.

Die Erfindung kann ganz oder teilweise computerimplementiert und somit in einer Software verkörpert sein. Somit bezieht sich die Erfindung auch auf ein Computerprogramm mit maschinenlesbare Anweisungen, die, wenn sie auf einem oder mehreren Computern ausgeführt werden, den oder die Computer, und eine von dem oder den Computern gesteuerte Fertigungsanlage, dazu veranlassen, das Verfahren auszuführen. In diesem Zusammenhang sind insbesondere Embedded-Systeme und Prozesssteuerungen, die zur Abarbeitung maschinenlesbarer Anweisungen in der Lage sind, ebenfalls als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 ein Ausführungsbeispiel des Verfahrens 100 und
Figur 2 eine Schnittzeichnung eines dreidimensionalen Objekts 1.

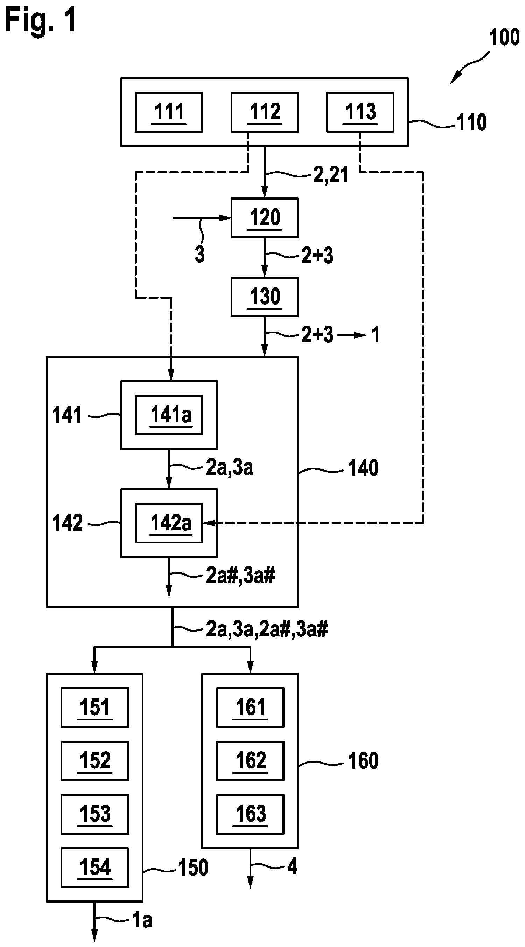

Figur 1 ist ein schematisches Ablaufdiagramm eines Ausführungsbeispiels des Verfahrens 100 zur Herstellung eines dreidimensionalen Objekts 1.

In Schritt 110 wird eine dreidimensionale Form 2, welche einen Innenraum 21 definiert, bereitgestellt. Gemäß Block 111 kann eine mittels 3D-Druck gefertigte Struktur als dreidimensionale Form 2 bereitgestellt werden.

In Schritt 120 wird ein Füllmaterial 3, welches mindestens ein flüssiges oder pastöses Monomer umfasst, in den Innenraum 21 eingebracht

In Schritt 130 wird das Monomer wird zu einem Polymer polymerisiert. Währenddessen wird in Schritt 140 die Temperatur 3a des Füllmaterials 3, und/oder die Temperatur 2a einer äußeren Oberfläche der dreidimensionalen Form 2, überwacht.

Auf der Basis der Ergebnisse 2a, 3a dieser Überwachung wird in Schritt 150 die Qualität 1a des Objekts 1 bewertet. Alternativ oder auch in Kombination hierzu kann in Schritt 160 mindestens eine Maßnahme 4 ergriffen werden, um die Temperatur 2a, 3a in eine gewünschte Richtung zu lenken.

Gemäß Block 141 kann das Überwachen der Temperatur beinhaltet, die Temperatur 2a, 3a an einer Mehrzahl von Orten zu messen. Es kann dann gemäß Block 142 unter Heranziehung dieser Temperaturen 2a, 3a die Temperatur 2a#, 3a# an mindestens einem weiteren Ort im Füllmaterial 3, und/oder in der dreidimensionalen Form 2, ermittelt werden. Hierfür können insbesondere beispielsweise gemäß Block 112 Orte, an denen eine Messung der Temperatur beabsichtigt ist, beim Bereitstellen der dreidimensionalen Form 2 markiert und/oder vorbereitet werden.

Gemäß Block 141a kann insbesondere beispielsweise mindestens ein Ort auf der äußeren Oberfläche der dreidimensionalen Form 2, an dem auf Grund der Geometrie der Form ein lokales Maximum oder Minimum der Temperatur zu erwarten ist, als Ort 2a für die Temperaturmessung gewählt werden.

Gemäß Block 142a kann insbesondere beispielsweise die Temperatur (2a#, 3a#) an dem mindestens einen weiteren Ort im Füllmaterial 3 mit einem parametrierten Modell ermittelt werden, dessen Parameter anhand von Messungen der Temperatur an Orten innerhalb des Füllmaterials 3 trainiert sind. Um diese Messungen für das Training des Modells zu erleichtern, können insbesondere beispielsweise gemäß Block 113 beim Bereitstellen der dreidimensionalen Form 2 Zugänge für das Einführen von Temperatursensoren an vorgegebene Orte im Innenraum 21 der Form 2 freigehalten werden.

Das Bewerten der Qualität 1a des Objekts 1 kann insbesondere beispielsweise umfassen, zu ermitteln,
- inwieweit die Temperatur 3a des Füllmaterials 3 überall im für das Polymerisieren vorgesehenen Bereich gelegen hat (Block 151);
- inwieweit die Temperatur 2a der dreidimensionalen Form 2 lokal einen vorgegebenen Maximalwert überschritten (oder einen vorgegebenen Minimalwert unterschritten) hat (Block 152);
- mit welchem Temperatur-Zeit-Profil das Objekt 1 abgekühlt ist (Block 153);
- inwieweit die Temperatur des Füllmaterials 3, und/oder der dreidimensionalen Form 2, von einer auf der Basis eines Modells ermittelten Prognose abweicht (Block 154).

Die Maßnahme 4 zur Lenkung der Temperatur 2a, 3a kann insbesondere beispielsweise umfassen,
- die Temperatur eines Ofens, in dem das Monomer polymerisiert wird, und/oder eine Verweilzeit des Objekts 1 in dem Ofen, zu verändern (Block 161); und/oder
- die Temperatur, mit der das Monomer in den Innenraum 21 der dreidimensionalen Form eingebracht wird, zu verändern (Block 162); und/oder
- das Objekt 1 lokal zu erwärmen oder zu kühlen (Block 163).

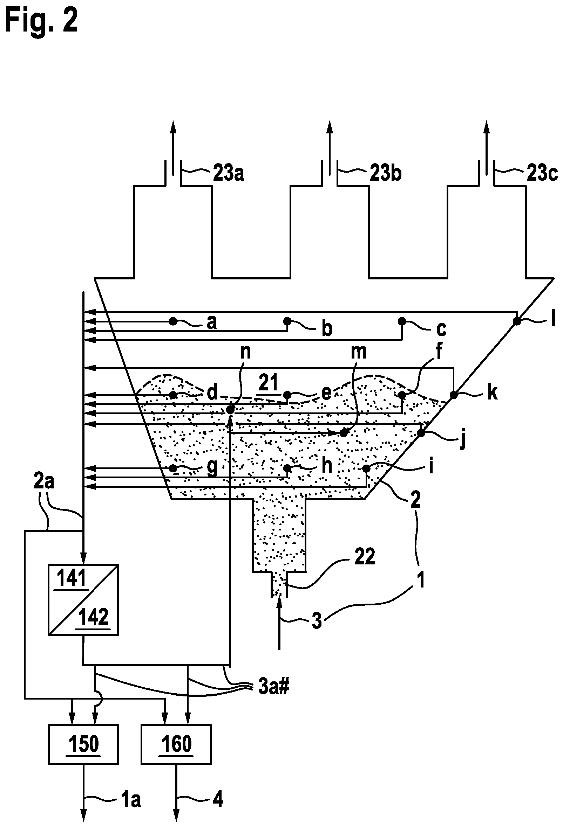

Figur 2 zeigt beispielhaft eine Momentaufnahme der Durchführung des Verfahrens 100 während des Einfüllens von Füllmaterial 3 in eine dreidimensionale Form 2. Die dreidimensionale Form 2 ist in Schnittzeichnung gezeigt und hat einen Einlass 22 für das Füllmaterial 3 sowie drei Steiger 23a-23c, durch die Luft aus der Form 2 entweichen kann, so dass sie dem Einfüllen des Füllmaterials 3 keinen Widerstand entgegensetzt. An der Außenseite der dreidimensionalen Form 2 sind zwölf Messpunkte a-I markiert. An diesen Messpunkten a-I wird gemäß Block 142 des Verfahrens 100 die Temperatur 2a der äußeren Oberfläche der Form 2 gemessen. Anhand eines zuvor trainierten Modells kann aus den an den Orten a-I gemessenen Temperaturen kann gemäß Block 142 des Verfahrens 100 die Temperatur 3a# an jedem beliebigen Ort innerhalb des Füllmaterials 3 in der Form 2 berechnet werden, hier an den Punkten m und n. Die direkt gemessenen Temperaturen 2a an der äußeren Oberfläche der Form 2 sowie die berechneten Temperaturen 3a# an anderen Orten innerhalb des Füllmaterials 3 können dann
- in Schritt 150 des Verfahrens 100 genutzt werden, um die Qualität 1 a des aus Form 2 und Füllmaterial 3 zusammengesetzten Objekts 1 auszuwerten, und/oder
- in Schritt 160 des Verfahrens 100 genutzt werden, um eine Maßnahme 4 zu ermitteln, mit der die Temperatur 2a an der äußeren Oberfläche der Form 2, und/oder die Temperatur 3a im Füllmaterial 3, in eine gewünschte Richtung zu lenken.

## Patentansprüche

1. Verfahren (100) zur Herstellung eines dreidimensionalen Objekts (1) mit den Schritten:
• eine dreidimensionale Form (2), welche einen Innenraum (21) definiert, wird bereitgestellt (110);
• ein Füllmaterial (3), welches mindestens ein flüssiges oder pastöses Monomer umfasst, wird in den Innenraum (21) eingebracht (120);
• das Monomer wird zu einem Polymer polymerisiert (130), **dadurch gekennzeichnet, dass** die Temperatur (3a) des Füllmaterials (3), und/oder die Temperatur (2a) einer äußeren Oberfläche der dreidimensionalen Form (2), überwacht wird (140); und
• auf der Basis der Ergebnisse (2a, 3a) dieser Überwachung wird die Qualität (1a) des Objekts (1) bewertet (150), und/oder mindestens eine Maßnahme (4) ergriffen (160), um die Temperatur (2a, 3a) in eine gewünschte Richtung zu lenken.

2. Verfahren (100) nach Anspruch 1, wobei eine mittels 3D-Druck gefertigte Struktur als dreidimensionale Form (2) bereitgestellt wird (111).

3. Verfahren (100) nach einem der Ansprüche 1 bis 2, wobei das Überwachen der Temperatur beinhaltet, die Temperatur (2a, 3a) an einer Mehrzahl von Orten zu messen (141) und unter Heranziehung dieser Temperaturen (2a, 3a) die Temperatur (2a#, 3a#) an mindestens einem weiteren Ort im Füllmaterial (3), und/oder in der dreidimensionalen Form (2), zu ermitteln (142).

4. Verfahren (100) nach Anspruch 3, wobei mindestens ein Ort auf der äußeren Oberfläche der dreidimensionalen Form (2), an dem auf Grund der Geometrie der Form ein lokales Maximum oder Minimum der Temperatur zu erwarten ist, als Ort (2a) für die Temperaturmessung gewählt wird (141a).

5. Verfahren (100) nach einem der Ansprüche 3 bis 4, wobei die Temperatur (2a#, 3a#) an dem mindestens einen weiteren Ort im Füllmaterial (3) mit einem parametrierten Modell ermittelt wird (142a), dessen Parameter anhand von Messungen der Temperatur an Orten innerhalb des Füllmaterials (3) trainiert sind.

6. Verfahren (100) nach einem der Ansprüche 3 bis 5, wobei Orte, an denen eine Messung der Temperatur beabsichtigt ist, beim Bereitstellen der dreidimensionalen Form (2) markiert und/oder vorbereitet werden (112).

7. Verfahren (100) nach einem der Ansprüche 3 bis 6, wobei beim Bereitstellen der dreidimensionalen Form (2) Zugänge für das Einführen von Temperatursensoren an vorgegebene Orte im Innenraum (21) der Form (2) freigehalten werden (113).

8. Verfahren (100) nach einem der Ansprüche 1 bis 7, wobei das Bewerten der Qualität (1a) des Objekts (1) beinhaltet, zu ermitteln,
• inwieweit die Temperatur (3a) des Füllmaterials (3) überall im für das Polymerisieren vorgesehenen Bereich gelegen hat (151);
• inwieweit die Temperatur (2a) der dreidimensionalen Form (2) lokal einen vorgegebenen Maximalwert überschritten oder einen vorgegebenen Minimalwert unterschritten hat (152);
• mit welchem Temperatur-Zeit-Profil das Objekt (1) abgekühlt ist (153);
• inwieweit die Temperatur des Füllmaterials (3), und/oder der dreidimensionalen Form (2), von einer auf der Basis eines Modells ermittelten Prognose abweicht (154).

9. Verfahren (100) nach einem der Ansprüche 1 bis 8, wobei die Maßnahme (4) zur Lenkung der Temperatur (2a, 3a) umfasst,
• die Temperatur eines Ofens, in dem das Monomer polymerisiert wird, und/oder eine Verweilzeit des Objekts (1) in dem Ofen, zu verändern (161); und/oder
• die Temperatur, mit der das Monomer in den Innenraum (21) der dreidimensionalen Form eingebracht wird, zu verändern (162); und/oder
• das Objekt (1) lokal zu erwärmen oder zu kühlen (163).

10. Computerprogramm, enthaltend maschinenlesbare Anweisungen, die, wenn sie auf einem oder mehreren Computern ausgeführt werden, den oder die Computer, und eine von dem oder den Computern gesteuerte Fertigungsanlage, dazu veranlassen, das Verfahren (100) nach einem der Ansprüche 1 bis 9 auszuführen.

11. Maschinenlesbarer Datenträger und/oder Downloadprodukt mit dem Computerprogramm nach Anspruch 10.

## Claims

1. Process (100) for producing a three-dimensional object (1) comprising the following steps:
• a three-dimensional mould (2) which defines an interior (21) is provided (110);
• a filling material (3) which comprises at least one liquid or pasty monomer is introduced (120) into the interior (21);
• the monomer is polymerized (130) to afford a polymer, **characterized in that** the temperature (3a) of the filling material (3) and/or the temperature (2a) of an external surface of the three-dimensional mould (2) is monitored (140); and
• on the basis of the results (2a, 3a) of this monitoring the quality (1a) of the object (1) is evaluated (150) and/or at least one measure (4) is taken (160) to direct the temperature (2a, 3a) in a desired direction.

2. Process (100) according to Claim 1, wherein a structure produced by 3D printing is provided (111) as the three-dimensional mould (2).

3. Process (100) according to either of Claims 1 to 2, wherein the monitoring of the temperature comprises measuring (141) the temperature (2a, 3a) at a plurality of sites and using these temperatures (2a, 3a) to determine (142) the temperature (2a#, 3a#) at at least one further site in the filling material (3) and/or in the three-dimensional mould (2).

4. Process (100) according to Claim 3, wherein at least one site on the external surface of the three-dimensional mould (2), at which a local maximum or minimum of temperature is to be expected due to the geometry of the mould, is selected as a site (2a) for temperature measurement (141a).

5. Process (100) according to any of Claims 3 to 4, wherein the temperature (2a#, 3a#) at the at least one further site in the filling material (3) is determined (142a) with a parameterized model whose parameters are trained using measurement of temperature at sites within the filling material (3).

6. Process (100) according to any of Claims 3 to 5, wherein sites at which measurement of temperature is intended are marked and/or prepared (112) during provision of the three-dimensional mould (2).

7. Process (100) according to any of Claims 3 to 6, wherein access paths for introduction of temperature sensors to predetermined sites in the interior (21) of the mould (2) are kept clear (113) during provision of the three-dimensional mould (2).

8. Process (100) according to any of Claims 1 to 7, wherein evaluation of the quality (1a) of the object (1) comprises determining
• to what extent the temperature (3a) of the filling material (3) has in all regions been in the range intended for polymerization (151);
• to what extent the temperature (2a) of the three-dimensional mould (2) has locally exceeded a predetermined maximum value or fallen below a predetermined minimum value (152);
• the temperature-time profile with which the object (1) underwent cooling (153);
• to what extent the temperature of the filling material (3) and/or of the three-dimensional mould (2) diverges (154) from a forecast calculated on the basis of a model.

9. Process (100) according to any of Claims 1 to 8, wherein the measure (4) for directing the temperature (2a, 3a) comprises
• altering (161) the temperature of an oven in which the monomer is polymerized and/or a residence time of the object (1) in the oven; and/or
• altering (162) the temperature at which the monomer is introduced into the interior (21) of the three-dimensional mould; and/or
• locally heating or cooling (163) the object (1).

10. Computer program containing machine-readable instructions which, when executed on one or more computers, prompt the computer(s) and a production plant controlled by the computer(s) to perform the process (100) according to any of Claims 1 to 9.

11. Machine-readable data carrier and/or download product comprising the computer program according to Claim 10.

## Revendications

1. Procédé (100) de fabrication d'un objet tridimensionnel (1), comprenant les étapes :
• une forme tridimensionnelle (2), laquelle définit un espace intérieur (21), est fournie (110) ;
• un matériau de remplissage (3), lequel comprend au moins un monomère liquide ou pâteux, est introduit (120) dans l'espace intérieur (21) ;
• le monomère est polymérisé en un polymère (130), **caractérisé en ce que** la température (3a) du matériau de remplissage (3) et/ou la température (2a) d'une surface extérieure de la forme tridimensionnelle (2) est surveillée (140) ; et
• sur la base des résultats (2a, 3a) de cette surveillance, la qualité (1a) de l'objet (1) est évaluée (150) et/ou au moins une mesure (4) est prise (160) afin d'orienter la température (2a, 3a) dans une direction souhaitée.

2. Procédé (100) selon la revendication 1, une structure fabriquée par impression 3D étant fournie (111) en tant que forme tridimensionnelle (2).

3. Procédé (100) selon l'une des revendications 1 et 2, la surveillance de la température comprenant la mesure (141) de la température (2a, 3a) à une pluralité d'endroits et, à l'aide de ces températures (2a, 3a), la détermination (142) de la température (2a#, 3a#) en au moins un endroit supplémentaire dans le matériau de remplissage (3) et/ou dans la forme tridimensionnelle (2).

4. Procédé (100) selon la revendication 3, au moins un endroit sur la surface extérieure de la forme tridimensionnelle (2), au niveau duquel est attendu un maximum ou minimum local de la température en raison de la géométrie de la forme, étant choisi (141a) comme endroit (2a) pour la mesure de la température.

5. Procédé (100) selon l'une des revendications 3 et 4, la température (2a#, 3a#) au niveau de l'au moins un emplacement supplémentaire dans le matériau de remplissage (3) étant déterminée (142a) avec un modèle paramétré dont les paramètres sont entraînés à l'aide de mesures de la température à des endroits à l'intérieur du matériau de remplissage (3).

6. Procédé (100) selon l'une des revendications 3 à 5, les endroits au niveau desquels une mesure de la température est prévue étant marqués et/ou préparés (112) lors de la fourniture de la forme tridimensionnelle (2).

7. Procédé (100) selon l'une des revendications 3 à 6, des accès pour l'introduction de capteurs de température à des endroits prédéfinis dans l'espace intérieur (21) de la forme (2) étant maintenus libres (113) lors de la fourniture de la forme tridimensionnelle (2).

8. Procédé (100) selon l'une des revendications 1 à 7, l'évaluation de la qualité (1a) de l'objet (1) comprenant la détermination de
• dans quelle mesure la température (3a) du matériau de remplissage (3) s'est maintenue partout dans la plage prévue pour la polymérisation (151) ;
• dans quelle mesure la température (2a) de la forme tridimensionnelle (2) a localement dépassé une valeur maximale prédéfinie ou est descendue en dessous d'une valeur minimale prédéfinie (152) ;
• avec quel profil température-temps l'objet (1) s'est refroidi (153) ;
• dans quelle mesure la température du matériau de remplissage (3) et/ou de la forme tridimensionnelle (2) s'écarte d'une prévision déterminée sur la base d'un modèle (154).

9. Procédé (100) selon l'une des revendications 1 à 8, la mesure (4) pour orienter la température (2a, 3a) comprenant
• modifier (161) la température d'un four dans lequel le monomère est polymérisé et/ou le temps de séjour de l'objet (1) dans le four ; et/ou
• modifier (162) la température à laquelle le monomère est introduit dans l'espace intérieur (21) de la forme tridimensionnelle ; et/ou
• chauffer ou refroidir localement (163) l'objet (1).

10. Programme informatique comprenant des instructions lisibles par machine qui, lorsqu'elles sont exécutées sur un ou plusieurs ordinateurs, amènent l'ordinateur ou les ordinateurs ainsi qu'une installation de fabrication commandée par l'ordinateur ou les ordinateurs à mettre en œuvre le procédé (100) selon l'une des revendications 1 à 9.

11. Support de données lisible par machine et/ou produit à télécharger comprenant le programme informatique selon la revendication 10.
